# EUROPEAN PATENT APPLICATION

(11) **EP 2 985 977 A1**
(43) Date of publication of application: **17.02.2016**
(21) Application number: 14002841.6
(22) Date of filing: 14.08.2014
(51) Int. Cl.: H04L 29/08, G05B 19/418

(54) **Field device with broadcasting ability**

(71) Applicant: ABB Technology AG, 8050 Zürich (CH)
(72) Inventor: Cheng, Chih-Hong, 69115 Heidelberg (DE); Hoernicke, Mario, 76829 Landau (DE); Krüger, Martin, 68165 Mannheim (DE); Drath, Rainer, 68239 Mannheim (DE)
(74) Representative: Marks, Frank

(57) **Abstract**

The invention relates to a device (2) for engagement in a process line (4), comprising a digital communication interface (5) for communication with other devices over a communication network (1) and a computing unit (6) with access to the communication interface (5), which executes a communication procedure which implements a communication protocol, where the communication procedure is designed to broadcast data containing information about the state of the device (2) via the communication network (1) to any number of other devices (2a; 2b; 2c) connected to the communication network (1). The invention further refers to a process line (4) comprising at least one such device (2).

## Description

The proposed invention is directed toward a device for engagement in a process line, comprising a digital communication interface for communication with other devices over a communication network and a computing unit with access to the communication interface, which executes a communication procedure which implements a communication protocol. The invention further refers to a process line comprising at least one such device.

The invention is related to the field of industrial automation systems and process lines. In these systems, there typically are a number of field devices, containing an interface for interaction with the physical process line, like sensors or actuators, and near field devices, like Programmable Logic Controllers (PLC), which communicate with the field devices.

In the known state of the art, the architecture of such a system is usually vertical, meaning that the field devices are only able to communicate sparsely, sending for example measurement values to a PLC or receiving commands from the PLC to e.g. activate or deactivate process components like valves. In other words, the PLC acts as central administrative element, whereas the field devices are hierarchically lower and do particularly not communicate with each other. Contrarily, in the so called "Industry 4.0", an emphasis is put on the idea of intelligent horizontal communication between process components. Since the field devices interact with their physical environment, the aim is to construct cyber-physical systems (CPS), where the field devices can interact in a less rigid, vertical manner than in the state of the art.

Today's devices are not capable of a pure horizontal communication. It is therefore the aim of this invention to provide a field device and a system comprising such field devices which relies on strictly horizontal and flexible communication.

The invention is based on the technical that the communication procedure is designed to broadcast data containing information about the state of the device via the communication network to any number of other devices connected to the communication network.

The state of the device can contain many different types of information that are relevant for any part of the process line. Broadcasting means that the information is not necessarily directed towards a certain component of the process line, like the PLC in the known state of the art, but generally to any other component that is connected to the communication network, which can be wired or wireless.

Advantageous about this solution is for example that if multiple devices are comprised in a process line system, they can directly interact with each other on a peer-to-peer basis, without the necessity of a central server. This allows for much simpler setup and maintenance of such a process line. The devices are then able to build a network with similarities to a social network comprising human members.

An improvement of the invention is based on the idea that as part of the communication protocol, the data that is broadcasted contains an identification code of the device. Further information may include the physical, i.e. geographical location of the device, which may be obtained for example by any kind of localization including methods based on GPS or WIFI triangulation. This way, the information about the geographic location of the device is available to the other devices and to service personnel, simplifying for example maintenance works.

The invention is further improved by supplying the broadcasted data with information about the workload, state or malfunctions of the device. This way, other devices may use this information to adapt their workload to compensate for any events occurring to the device. Examples include a pump that broadcasts the workload, for example the current flow rate, the state, for example running or not running, or a malfunction, like an interruption of the power supply. Each of these broadcasts can be picked up by a PLC or by other devices along the process line to be reacted upon accordingly.

A further improvement of the invention is achieved by enabling the device to subscribe to the broadcasts of a second device according to this invention. This way, the device registers any broadcast of the second device, which is useful in a process line where different components serve purposes that are functionally dependent on each other. For example a vent may subscribe to the broadcasts of a pressure meter. This way, a number of devices can build automated networks, enabling a flexible process line.

The invention can be further improved by enabling the device to introduce itself to the participants of the communication network. This way, the device can easily be inserted without additional administrative or technical effort.

Another advantage may be obtained by triggering the broadcast of information, for example alerts, by triggers like measurement values exceeding safety limits or by broadcasting the information in set time intervals, as opposed to for example sending the information only to a PLC upon request.

The invention is improved by supplying the communication procedure with a filtering algorithm, where broadcasts from any member of the communication network are picked up if they contain certain key words. These can be assigned to the ID, the geographic location, the malfunction or workload or any part of the information contained in the broadcast.

The communication network can be based on wired communication, for example USB or FireWire (IEEE 1394) or Ethernet or any other kind of physical data bus, or on wireless communication, preferably in the range comprising frequencies between 300 MHz and 11 GHz, including for example Bluetooth, WIFI and GSM. Nonetheless, also optical communication over glass fibers or radio signaling can be used.

Preferably, the device exhibits an interface to the environment, like an actuator or a sensor, and is thus working as field device.

The invention also relates to a process line including at least one device as illustrated above, which may additionally include a PLC which can centrally react to broadcasts of any of these devices.

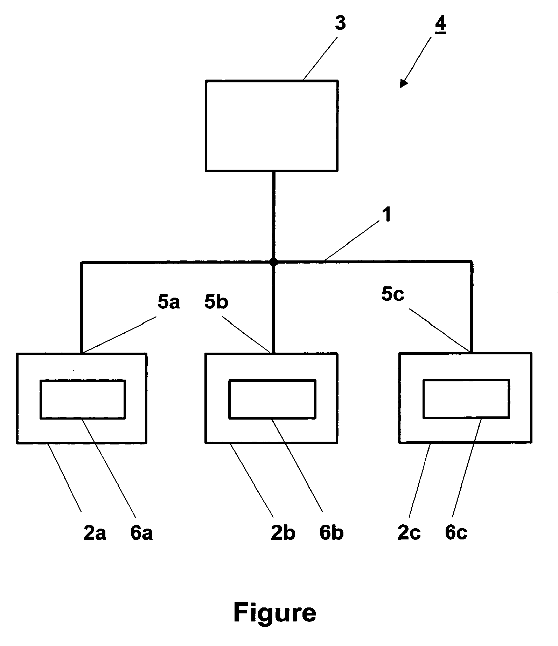

Further improvements of the invention are presented below in more detail together with the description of a preferred embodiment of the invention with reference to the figure. It shows in a schematic representation a data bus with field devices.

According to the figure, a process line 4 comprises a communication network 1 in form of a data bus which connects a Process Control System 3 (PCS) to the communication interfaces 5a, 5b, 5c of devices 2a, 2b, 2c in form of a flow meter 2a, a pump 2b and a voltage supply 2c, each containing a computing unit 6a, 6b, 6c.

The horizontal communication, enabled by the broadcasts of the field devices 2a, 2b, 2c along the communication network 1 in form of a data bus, enables the pump 2b to react to the flow rate reported by the flow meter 2a. A power outage reported by the pump 2b can be picked up by the PCS 3, which in turn activates the voltage supply 2a and signals technical staff.

The invention is not constricted to the example presented above. Different embodiments are conceivable, including for example a communication network which does not rely on the inclusion of a PCS. In that case, for example a backup voltage unit can pick up the broadcast containing the power outage malfunction and activate accordingly without input from a hierarchically higher device like the PCS.

### Reference numerals list

- 1: communication network
- 2, 2a, 2b, 2c: device
- 3: PCS
- 4: process line
- 5, 5a, 5b, 5c: communication interface
- 6, 6a, 6b, 6c: computing unit

## Claims

1. Device (2) for engagement in a process line (4), comprising a digital communication interface (5) for communication with other devices over a communication network (1) and a computing unit (6) with access to the communication interface (5), which executes a communication procedure which implements a communication protocol,
**characterized in that**
the computing unit (6) is broadcasting data containing information about the state of the device (2) via the communication network (1) to any number of other devices (2a; 2b; 2c) connected to the communication network (1).

2. Device (2) according to claim 1,
**characterized in that**
the computing unit (6) provides the broadcasted data with a unique identification code and/or the physical location and/or the workload and/or a malfunction of the device (2).

3. Device (2) according to one of the preceding claims,
**characterized in that**
the computing unit (6) provides a subscription mechanism to let the device (2) subscribe to broadcasts from another device (2).

4. Device (2) according to claim 3,
**characterized in that**
the subscription mechanism contains a filter for specific key words comprised in the broadcast.

5. Device (2) according to one of the preceding claims,
**characterized in that**
the computing unit (6) provides an introduction mechanism to let the device (2) introduce itself to the members of the communication network.

6. Device (2) according to one of the preceding claims,
**characterized in that**
the computing unit (6) provides an alert functionality, where the device (2) broadcasts state information or an alert triggered by a group of events, comprising the measurement of a value outside an upper or lower limit and the passage of a time interval.

7. Device (2) according to any of the preceding claims,
**characterized in that**
the communication interface (5) is connected to a communication network (1) in form of a data bus.

8. Device (2) according to any of the preceding claims,
**characterized in that**
the communication interface (5) emits and / or receives electromagnetic signals carrying broadcasts with frequencies between 300 MHz and 11 GHz.

9. Device (2) according to any of the preceding claims,
**characterized in that**
it is designed as field device, comprising a physical interface for physical interaction with the process line (4).

10. Process line (4) for automated processing comprising a device (2) according to one of the preceding claims.

11. Process line (4) according to claim 10,
**characterized in that**
it comprises a Process Control System (3) (PCS) device that is subscribed to the broadcasts of the devices (2) of the process line (4), to react to state changes of the devices (2).
